# EUROPÄISCHE PATENTANMELDUNG

(11) **EP 1 243 465 A2**
(43) Veröffentlichungstag der Anmeldung: **25.09.2002**
(21) Anmeldenummer: 02005820.2
(22) Anmeldetag: 14.03.2002
(51) Int. Cl.: B60P 3/00

(54) **Absturzsicherung für begehbare Pritschen**

(30) Priorität: 22.03.2001 DE 10114359
(71) Anmelder: PUTZMEISTER AKTIENGESELLSCHAFT, 72631 Aichtal (DE)
(72) Erfinder: Alwes, Dieter, 72631 Aichtal (DE); Von Bäumen, Paul, 71069 Sindelfingen (DE); Benckert, Hartmut, Dr., 70794 Filderstadt (DE); Hurr, Hellmut, 72760 Reutlingen (DE)
(74) Vertreter: Wolf, Eckhard, Dr.-Ing.

(57) **Zusammenfassung**

Die Erfindung bezieht sich auf eine mobile Fördereinrichtung, insbesondere eine Autobetonpumpe mit einem Fahrgestell (10), einem auf dem Fahrgestell angeordneten, vorzugsweise als um eine fahrgestellfeste Hochachse drehbarer Knick- oder Teleskopmast ausgebildeten Verteilermast (16) und seitlich neben dem Verteilermast fahrgestellfest angeordneten begehbaren Pritschen (22,26). Zur Absturzsicherung für das Bedienungs- und Wartungspersonal wird gemäß der Erfindung vorgeschlagen, daß die Pritschen (22,26) an ihrem äußeren Seitenrand (28) ein zumindest partiell in Richtung Pritschenoberfläche oder parallel zum Seitenrand (28) umklappbares, verschiebbares oder versenkbares Geländer (30) aufweisen.

## Beschreibung

Die Erfindung betrifft eine mobile Fördereinrichtung, insbesondere eine Autobetonpumpe, mit einem Fahrgestell, einem auf dem Fahrgestell angeordneten, vorzugsweise als um eine fahrgestellfeste Hochachse drehbarer Knick- oder Teleskopmast ausgebildeten Verteilermast und seitlich neben dem Verteilermast fahrgestellfest angeordneten begehbaren Pritschen.

An fahrbaren Betonpumpen befinden sich seitlich neben dem Verteilermast angeordnete Pritschen, die einerseits als Laufsteg zur Durchführung von Einstell- und Montagearbeiten und zum anderen als Beladeflächen zur Aufnahme von Zubehörteilen, Kotflügeln, Kleinteilmagazinen, Werkzeugkisten, Kanthölzern und dergleichen dienen.

Der Erfindung liegt die Aufgabe zugrunde, das Bedien- und Wartungspersonal beim Begehen der Pritschen gegen Absturz zu sichern.

Zur Lösung dieser Aufgabe werden die im Anspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß die Pritschen an ihrem äußeren Seitenrand ein zumindest partiell in Richtung Pritschenoberfläche oder parallel zum Seitenrand umklappbares, verschiebbares oder versenkbares Geländer aufweisen. Mit diesen Maßnahmen wird erreicht, daß eine Absturzsicherung für das Bedien- und Wartungspersonal gewährleistet ist und trotzdem die Beladungsfähigkeit der Pritschen erhalten bleibt. Eine bevorzugte Ausgestaltung der Erfindung sieht vor, daß das Geländer mindestens zwei im Abstand voneinander angeordnete Geländerstützen aufweist, und daß die Geländerstützen durch mindestens ein langgestrecktes Absperrelement miteinander verbunden sind. Das Absperrelement kann dabei beispielsweise aus der Gruppe Seil, Band, Kette, Stange, Netz, Tuch ausgewählt werden. Vorteilhafterweise bildet zumindest eines der Absperrelemente einen Handlauf, der einstückig mit den Geländerstützen verbunden ist.

Eine bevorzugte Ausgestaltung der Erfindung sieht vor, daß die Geländerstützen einen mit der Pritsche starr verbundenen Fußsockel und ein über ein Klappgelenk am Fußsockel angelenktes Klappstück aufweisen. Die Gelenkachse des Klappgelenks ist dabei entweder parallel oder quer zum Seitenrand der Pritsche ausgerichtet. Das Klappgelenk ist vorteilhafterweise mit einem zumindest in der aufgerichteten Stellung das Klappstück sperrenden Riegelelement versehen. Das Riegelelement kann ein in der aufgerichteten Stellung des Klappstücks selbsttätig einrastbares Rastglied aufweisen oder von Hand, vorzugsweise unter Verwendung eines Werkzeugs ver- und entriegelbar sein.

Eine weitere vorteilhafte Ausgestaltung der Erfindung sieht vor, daß die Geländerstützen über ein Langloch an einen pritschenfesten Gelenkbolzen angelenkt sind und daß unter den Gelenkbolzen jeweils eine nach oben offene Einstecklasche zur Aufnahme des unteren Endes der zugehörigen Geländerstütze in deren aufgerichtetem Zustand pritschenfest angeordnet ist.

Eine weitere Ausführungsvariante sieht vor, daß die Geländerstützen teleskopartig zusammenschiebbar und im Pritschenkörper versenkbar sind.

Eine weitere abgewandelte Ausgestaltung der Erfindung sieht vor, daß im Geländer ein parallel zu dessen Seitenrand verlaufender Kettentrieb zum Verschieben der Geländerstützen angeordnet ist. Die Geländerstützen können mit Führungsrollen bestückt sein, die in Führungsschienen innerhalb des Pritschenkörpers eingreifen. Dabei braucht nur eine erste Geländerstütze mit der Kette des Kettentriebs gekuppelt sein, während die übrigen Geländerstützen vorzugsweise über die Absperrelemente mit der ersten Geländerstütze verbunden sind.

Grundsätzlich ist es möglich, daß zumindest eine der Geländerstützen mit motorischen, hydraulischen oder pneumatischen Antriebsmitteln aufrichtbar, umklappbar und/oder verschiebbar sind. Die angetriebene Geländerstütze kann mit den übrigen Geländerstützen vorzugsweise über die Absperrelemente mechanisch gekoppelt werden.

Um sicherzustellen, daß die Absturzsicherung beim Begehen der Pritsche aktiviert wird, ist es von Vorteil, wenn die Antriebsmittel über eine Lichtschranke oder ein Schaltorgan auslösbar sind.

Im folgenden wird die Erfindung anhand der in der Zeichnung in schematischer Weise dargestellten Ausführungsbeispiele näher erläutert. Es zeigen
- Fig. 1: eine Seitenansicht einer Autobetonpumpe mit seitlich am Fahrgestell angeordneten begehbaren Pritschen;
- Fig. 2a und b: eine Stirnseitenansicht eines Pritschenteils mit Geländer in aufgerichteter und eingeklappter Stellung;

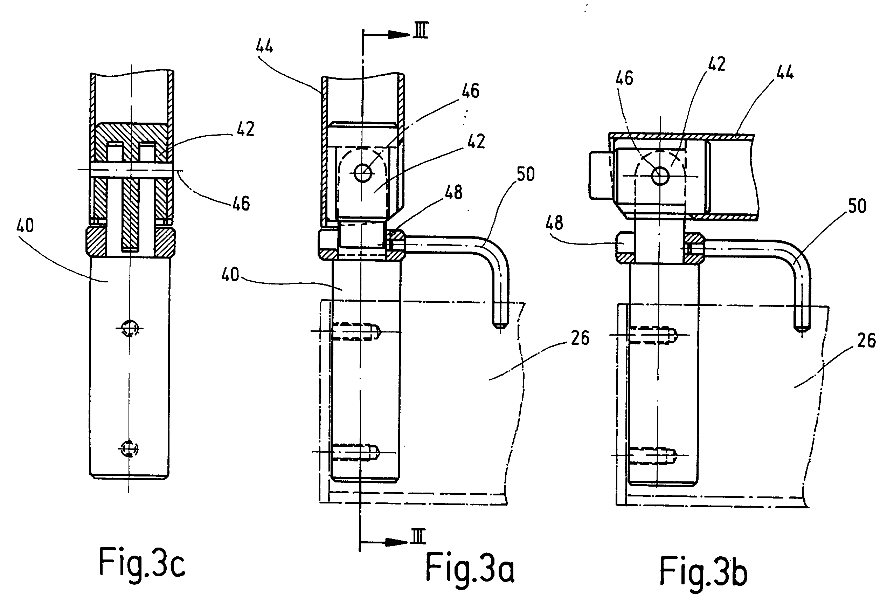

- Fig. 3a und b: einen vergrößerten Ausschnitt aus Fig. 2a und b;
- Fig. 3c: einen Schnitt entlang der Schnittlinie III-III der Fig. 3a;
- Fig. 4a bis c: eine Seitenansicht eines Pritschengeländers in aufgerichtetem, teilweise eingeklapptem und vollständig eingeklapptem Zustand;
- Fig. 5a bis c: ein weiteres abgewandeltes Ausführungsbeispiel eines Pritschengeländers in Darstellungen entsprechend Fig. 4a bis c;
- Fig. 6a und b: je einen vergrößerten Ausschnitt aus Fig. 5a und b;
- Fig. 7a und b: eine Seitenansicht eines Pritschengeländers mit teleskopierbaren Geländerstützen in ausgefahrener und eingefahrener Endstellung;
- Fig. 8a bis c: ein ausfahrbares Pritschengeländer mit mechanischem Antrieb über ein Kettengetriebe in ausgefahrener, teilweise eingefahrener und eingefahrener Endstellung;
- Fig. 9: einen vergrößerten Ausschnitt aus Fig. 8c.

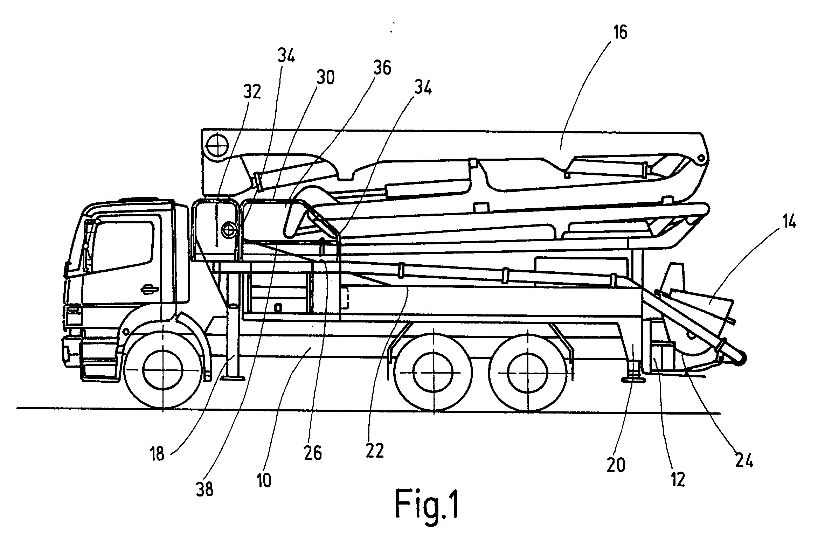

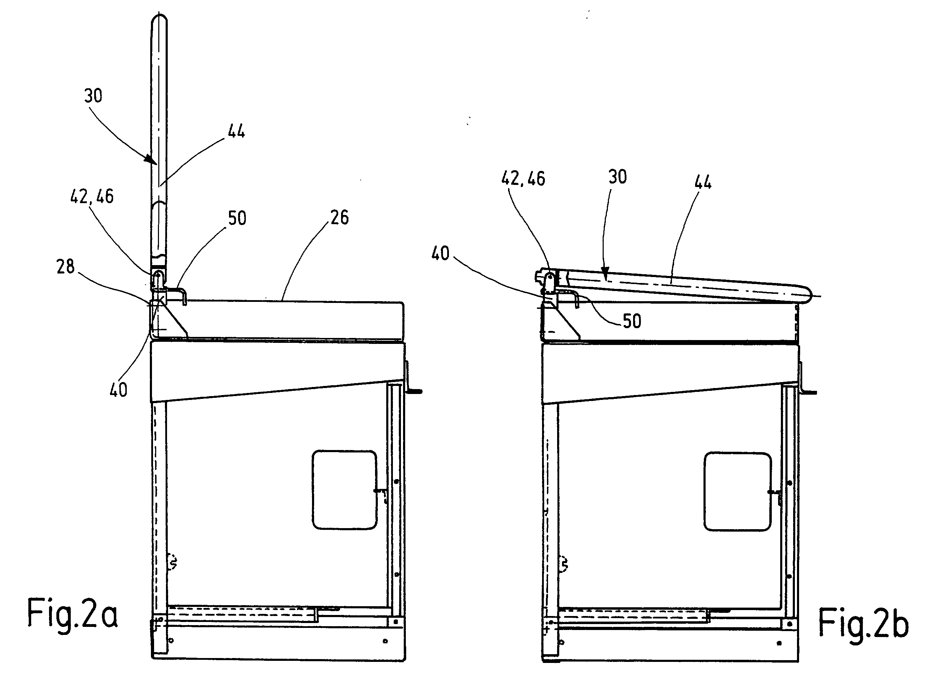

Die in Fig. 1 dargestellte Autobetonpumpe weist ein Fahrgestell 10, eine auf dem Fahrgestell angeordnete Dickstoffpumpe 12 mit Materialaufgabebehälter 14 und Verteilermast 16, vorder- und rückwärtige, am Fahrgestell ausfahrbare Stützbeine 18,20, zwei seitlich neben der Dickstoffpumpe 12 und dem Verteilermast 16 am Fahrgestell angeordnete Pritschen 22 sowie eine zu den Pritschen führende rückwärtige Aufstiegstreppe 24 auf. Die Pritsche 22 führt im vorderen Teil zu einer erhöhten Pritschenpartie 26, die an ihrem äußeren Seitenrand 28 ein partiell in Richtung Pritschenoberfläche umklappbares Geländer 30 sowie ein feststehendes Geländer 32 aufweist. Das umklappbare Geländer 30 weist zwei im Abstand voneinander angeordnete Geländerstützen 34 auf, die durch zwei langgestreckte Absperrelemente 36,38 miteinander verbunden sind. Das Absperrelement 36 ist einstückig mit den Geländerstützen 34 verbunden und bildet einen Handlauf, während das Absperrelement 38 als Stangenelement zwischen den beiden Geländerstützen 34 eingesetzt ist. Die Geländerstützen 34 weisen einen mit der erhöhten Pritschenpartie 26 starr verbundenen Fußsockel 40 und ein über ein Klappgelenk 42 am Fußsockel 40 angelenktes Klappstück 44 auf. Die Gelenkachse 46 des Klappgelenks 42 ist dabei parallel zum Seitenrand 28 der Pritsche 22,26 ausgerichtet, so daß das Geländer 30 nach innen auf den Pritschenboden umgeklappt werden kann (vgl. Fig. 2a, 2b). Im Bereich des Klappgelenks 42 ist ein Riegelelement 48 angeordnet, das mit Hilfe eines Handgriffs 50 zwischen einer Offenstellung und einer Schließstellung verdrehbar ist und das Klappstück 44 in seiner aufgerichteten Stellung verriegelt.

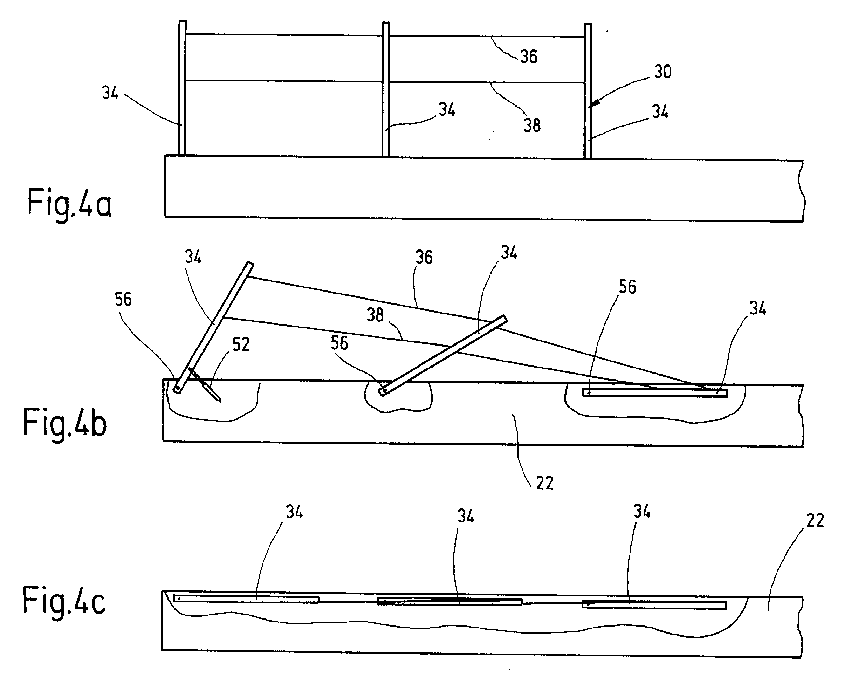

Bei dem in Fig. 4a bis c gezeigten Ausführungsbeispiel weist das Geländer 30 drei Geländerstützen 34 auf, die über je ein Klappgelenk mit der Pritsche 22 verbunden sind. Die Gelenkachsen 56 sind bei diesem Ausführungsbeispiel quer zum Seitenrand 28 der Pritsche ausgerichtet. Die Absperrelemente 36,38 sind als zwischen den Gelenkstützen gespannte Seile oder Drähte ausgebildet. Das Aus- und Einklappen des Geländers erfolgt über einen Hydrozylinder 52, der an einer der Gelenkstützen 34 angreift. In der eingeklappten Endstellung gemäß Fig. 4c sind die Geländerstützen 34 und die Absperrelemente 36,38 unterhalb der Pritschenoberfläche verdeckt in einer Pritschenausnehmung angeordnet.

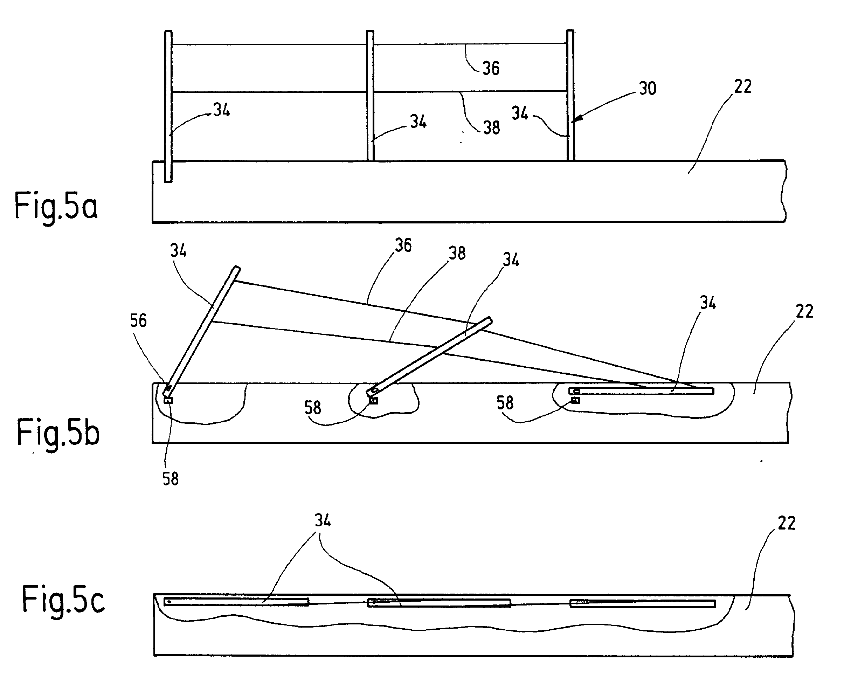

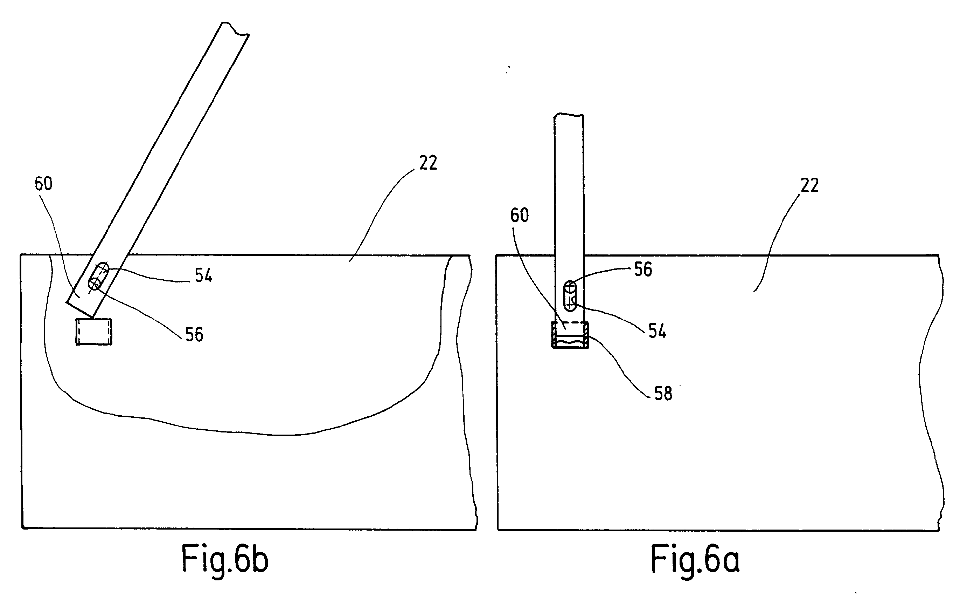

Das Ausführungsbeispiel nach Fig. 5a bis c unterscheidet sich von dem Ausführungsbeispiel nach Fig. 4a bis c dadurch, daß die Geländerstützen 34 von Hand aus- und eingeklappt werden. Die Geländerstützen sind zu diesem Zweck über ein Langloch 54 an einem pritschenfesten Gelenkbolzen 56 angelenkt. Unter dem Gelenkbolzen 56 befindet sich jeweils eine nach oben offene Einstecklasche 58, die zur Aufnahme des unteren Endes 60 der zugehörigen Geländerstütze 34 in deren aufgerichtetem Zustand pritschenfest angeordnet ist. Die Geländerstützen 34 werden im aufgerichteten Zustand von Hand in die Einstecklasche 58 eingesteckt. Zum Einklappen müssen die Geländerstützen 34 zunächst aus der Einstecklasche 58 ausgehoben werden, so daß sie um die Achse des Gelenkbolzens 56 umgeklappt werden können (Fig. 6b).

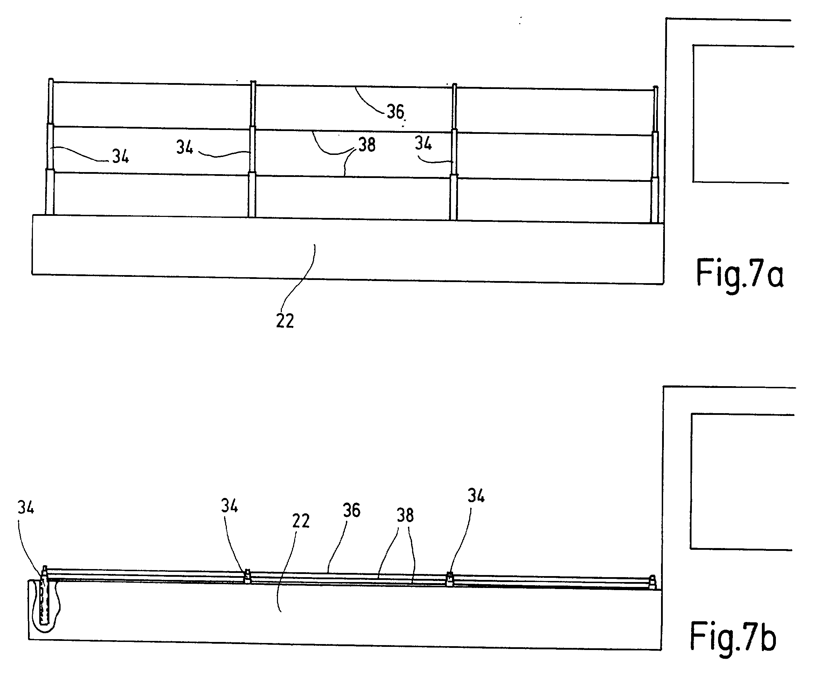

Bei dem in Fig. 7a und b gezeigten Ausführungsbeispiel sind vier Geländerstützen 34 vorgesehen, die teleskopartig zusammenschiebbar und im Pritschenkörper versenkbar sind. Die Absperrelemente 36,38 sind als Seile ausgebildet, die jeweils benachbarte Teleskopteile der Geländerstützen 34 miteinander verbinden.

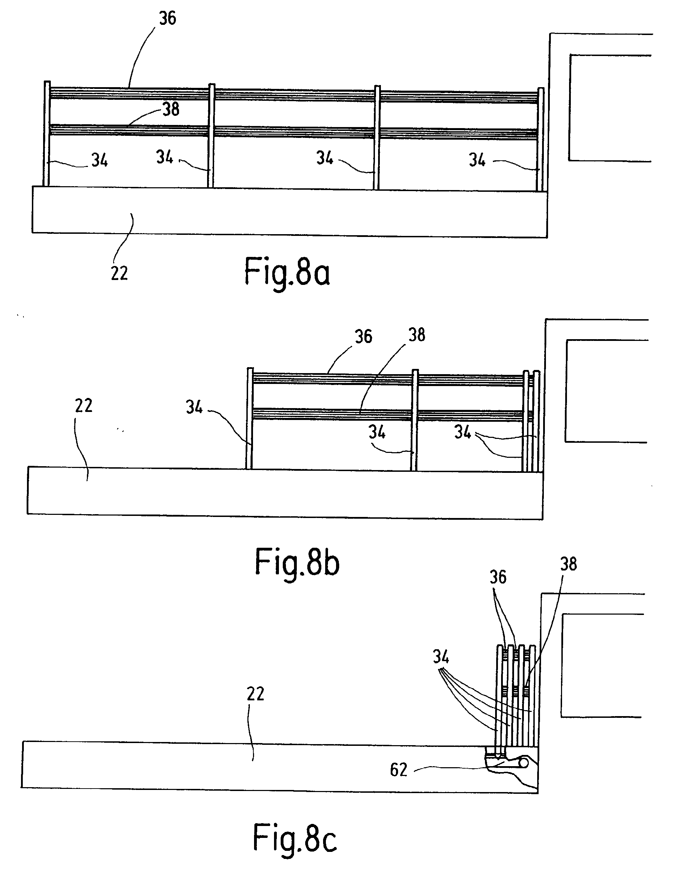

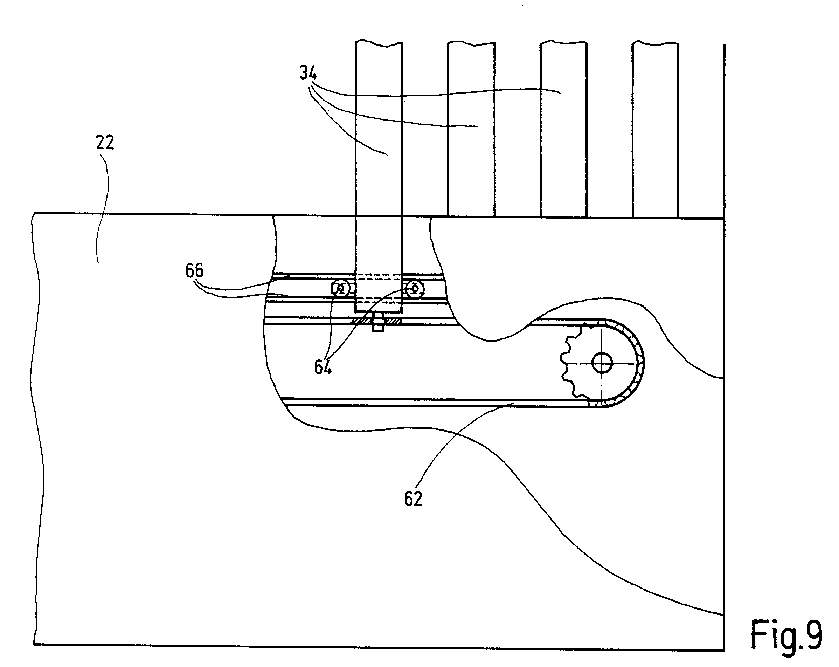

Bei dem Ausführungsbeispiel nach Fig. 8a bis c, 9 ist im Pritschenkörper 22 ein parallel zu dessen Seitenrand 28 verlaufender Kettentrieb 62 zum Verschieben der Geländerstützen 34 vorgesehen. Die Geländerstützen 34 sind mit Führungsrollen 64 bestückt, die in Führungsschienen 66 innerhalb des Pritschenkörpers 22 eingreifen. Die Geländerstützen 34 sind mit Absperrelementen 36,38 verbunden, die bei dem dortigen Ausführungsbeispiel als Zugbänder ausgebildet sind. Deshalb muß nur die jeweils erste Geländerstütze 34 mit der Kette des Kettentriebs 62 gekuppelt sein, während die übrigen Geländerstützen 34 über die Absperrelemente 36,38 beim Ausfahren mit der ersten Geländerstütze 34 mitgenommen werden.

Das Geländer 30 bildet eine Absturzsicherung für das auf die Pritsche 22,26 aufsteigende Bedienungs- und Wartungspersonal. Um sicherzustellen, daß das Geländer 30 beim Betreten der Pritsche 22,26 ausgefahren wird, ist es von Vorteil, wenn die Antriebsmittel für das Geländer über eine Lichtschranke oder ein beim Aufsteigen automatisch betätigbares Schaltorgan auslösbar sind.

Zusammenfassend ist folgendes festzuhalten: Die Erfindung bezieht sich auf eine mobile Fördereinrichtung, insbesondere eine Autobetonpumpe mit einem Fahrgestell 10, einem auf dem Fahrgestell angeordneten, vorzugsweise als um eine fahrgestellfeste Hochachse drehbarer Knick- oder Teleskopmast ausgebildeten Verteilermast 16 und seitlich neben dem Verteilermast fahrgestellfest angeordneten begehbaren Pritschen 22,26. Zur Absturzsicherung für das Bedienungs- und Wartungspersonal wird gemäß der Erfindung vorgeschlagen, daß die Pritschen 22,26 an ihrem äußeren Seitenrand 28 ein zumindest partiell in Richtung Pritschenoberfläche oder parallel zum Seitenrand 28 umklappbares, verschiebbares oder versenkbares Geländer 30 aufweisen.

## Patentansprüche

1. Mobile Fördereinrichtung, insbesondere Autobetonpumpe, mit einem Fahrgestell (10), einem auf dem Fahrgestell (10) angeordneten, vorzugsweise als um eine fahrgestellfeste Hochachse drehbarer Knickoder Teleskopmast ausgebildeten Verteilermast (16) und seitlich neben dem Verteilermast (16) fahrgestellfest angeordneten begehbaren Pritschen (22,26), **dadurch gekennzeichnet, daß** die Pritschen (22,26) an ihrem äußeren Seitenrand (28) ein zumindest partiell in Richtung der Pritschenoberfläche oder parallel zum Seitenrand umklappbares, verschiebbares oder versenkbares Geländer (30) aufweisen.

2. Mobile Fördereinrichtung nach Anspruch 1, **dadurch gekennzeichnet, daß** das Geländer (30) mindestens zwei im Abstand voneinander angeordnete Geländerstützen (34) aufweist, und daß die Geländerstützen (34) durch mindestens ein langgestrecktes Absperrelemente (36,38) miteinander verbunden sind.

3. Mobile Fördereinrichtung nach Anspruch 2, **dadurch gekennzeichnet, daß** das Absperrelement (36,38) aus der Gruppe Seil, Band, Kette, Stange, Netz, Tuch ausgewählt ist.

4. Mobile Fördereinrichtung nach Anspruch 2 oder 3, **dadurch gekennzeichnet, daß** zumindest eines der Absperrelemente (36) einen Handlauf bildet und einstückig mit den Geländerstützen (34) verbunden ist.

5. Mobile Fördereinrichtung nach einem der Ansprüche 1 bis 4, **dadurch gekennzeichnet, daß** die Geländerstützen (34) einen mit der Pritsche (22,26) starr verbundenen Fußsockel (40) und ein über ein Klappgelenk (42) am Fußsockel angelenktes Klappstück (44) aufweisen.

6. Mobile Fördereinrichtung nach Anspruch 5, **dadurch gekennzeichnet, daß** die Gelenkachse (46) des Klappgelenks (42) parallel zum Seitenrand (28) der Pritsche (22,26) verläuft.

7. Mobile Fördereinrichtung nach Anspruch 5, **dadurch gekennzeichnet, daß** die Gelenkachse (56) des Klappgelenks quer zum Seitenrand (28) der Pritsche (22,26) verläuft.

8. Mobile Fördereinrichtung nach einem der Ansprüche 5 bis 7, **gekennzeichnet durch** ein das Klappgelenk (42) zumindest in der aufgerichteten Stellung des Klappstücks (44) sperrendes Riegelelement (48).

9. Mobile Fördereinrichtung nach Anspruch 8, **dadurch gekennzeichnet, daß** das Riegelelement (48) ein in der aufgerichteten Stellung des Klappstücks selbsttätig einrastbares Rastglied aufweist.

10. Mobile Fördereinrichtung nach Anspruch 8, **dadurch gekennzeichnet, daß** das Riegelelement (48) von Hand, vorzugsweise unter Verwendung eines Werkzeugs (50) ver- und entriegelbar ist.

11. Mobile Fördereinrichtung nach einem der Ansprüche 1 bis 4, **dadurch gekennzeichnet, daß** die Geländerstützen (34) über ein Langloch (54) an einem pritschenfesten Gelenkbolzen (56) angelenkt sind, und daß unter dem Gelenkbolzen (56) jeweils eine nach oben offene Einstecklasche (58) zur Aufnahme des unteren Endes (60) der zugehörigen Geländerstütze (34) in deren aufgerichtetem Zustand pritschenfest angeordnet ist.

12. Mobile Fördereinrichtung nach einem der Ansprüche 1 bis 4, **dadurch gekennzeichnet, daß** die Geländerstützen (34) teleskopartig zusammenschiebbar und im Pritschenkörper versenkbar sind.

13. Mobile Fördereinrichtung nach einem der Ansprüche 1 bis 4, **dadurch gekennzeichnet, daß** im Pritschenkörper (22) ein parallel zu dessen Seitenrand (28) verlaufender Kettentrieb (62) zum Verschieben der Geländerstützen (34) angeordnet ist.

14. Mobile Fördereinrichtung nach Anspruch 13, **dadurch gekennzeichnet, daß** die Geländerstützen (34) mit Führungsrollen (64) bestückt sind, die in Führungsschienen (66) innerhalb des Pritschenkörpers eingreifen.

15. Mobile Fördereinrichtung nach Anspruch 13 oder 14, **dadurch gekennzeichnet, daß** nur eine erste Geländerstütze (34) mit der Kette des Kettentriebs (62) gekuppelt ist und daß die übrigen Geländerstützen (34) vorzugsweise über die Absperrelemente (38) mit der ersten Geländerstütze (34) verbunden sind.

16. Mobile Fördereinrichtung nach einem der Ansprüche 1 bis 15, **dadurch gekennzeichnet, daß** zumindest eine der Geländerstützen (34) mit motorischen, hydraulischen oder pneumatischen Antriebsmitteln aufrichtbar, umklappbar und/oder verschiebbar ist.

17. Mobile Fördereinrichtung nach Anspruch 16, **dadurch gekennzeichnet, daß** die angetriebene Geländerstütze (34) mit den übrigen Geländerstützen vorzugsweise über die Absperrelemente (36,38) mechanisch gekoppelt sind.

18. Mobile Fördereinrichtung nach Anspruch 16 oder 17, **dadurch gekennzeichnet, daß** die Antriebsmittel über eine Lichtschranke oder ein Schaltorgan auslösbar sind.
